# EUROPEAN PATENT APPLICATION

(11) **EP 4 534 303 A1**
(43) Date of publication of application: **09.04.2025**
(21) Application number: 24190298.0
(22) Date of filing: 23.07.2024
(51) Int. Cl.: B60G 3/20, B60K 1/02, B60K 17/04

(54) **INDEPENDENT SUSPENSION**

(30) Priority: 04.10.2023 IT 202300020493
(71) Applicant: BRIST AXLE SYSTEMS S.R.L., 25018 Montichiari (BS) (IT)
(72) Inventor: DE CESARI, Filippo, Mazzano (Brescia) (IT); BONERA, Danilo, Collebeato (Brescia) (IT); HACIYUNUS, Ahmet, Istanbul (TR); OLDRATI, Alessandro, Grumello del Monte (Bergamo) (IT)
(74) Representative: Zermani Biondi Orsi, Umberto

(57) **Abstract**

An independent suspension (1) for vehicles, in particular for transporting people and/or materials, comprising a hub (2) defining a rotation axis (R) of the wheel (3) of the vehicle and an electric motor (4), operatively connected to the hub (2) and configured to set the hub (2) in rotation. The independent suspension (1) further comprises a multi-arm support element (5) operatively connected to the hub (2) and comprising a plurality of arms (5b). Each arm (5b) of the plurality of arms (5b) is angularly adjustable with respect to the rotation axis (R) of the wheel (3) of the vehicle or with respect to a connection portion (5a) connecting the multi-arm support element (5) itself with the hub (2).

## Description

The present invention relates to an independent suspension for vehicles. Furthermore, the present invention relates to a vehicle for transporting people and/or materials.

The term vehicle is used to mean any type of vehicle, such as (in accordance with a non-exhaustive list) buses, couriers, trucks, special vehicles and the like. In other words, the term vehicles can mean light, medium or heavy commercial vehicles. For example, the term vehicle refers to transport means suitable for transporting people or large volumes of material (loose or boxed) as well as transporting luggage. Furthermore, the term vehicle can be understood to mean a vehicle provided with a lowered platform.

As is known, the load plane of such vehicles is influenced by the general structure of the vehicle chassis itself. In particular, it is known that if the vehicle is provided with classic axles, these generate a footprint which considerably reduces the volume of the load plane itself.

In the prior art, axles of the independent type are known, viz., structured so as to allow each wheel on the same axle to move vertically (viz., react to a bump in the road) independently of the other, allowing the volume defined by the load plane to be increased, albeit slightly.

Nevertheless, the existing solutions almost always have a central portion occupied by suspension or transmission elements, or if there is a free space, it is not to a sufficient extent to have a comfortable passage for material or people.

Therefore, the Applicant underlines how such an increase in volume is not sufficient and may be difficult to use for a user intending to deposit materials inside the portion defined between the independent axles. Specifically, the user should literally enter the load plane, dragging or pushing the material or luggage trying to insert it into the space defined between the two axles, resulting in a prolonged time for the material (or luggage) to be loaded inside the load plane itself. In other words, the known axles do not allow to obtain for sufficiently large volumes or have such reduced dimensions that they would require an operator responsible for loading luggage to enter the load platform.

Furthermore, in the case of a vehicle provided with a tailgate for loading materials (as well as a tailgate or rear door for passenger access in buses), the footprint generated by the known solutions makes it difficult and tiring for an operator to load materials.

Disadvantageously, the known solutions are therefore ineffective and do not allow to obtain sufficient space between the suspensions which allows to adequately exploit the load plane.

It is therefore the technical task of the present invention to provide an independent suspension and a vehicle which are capable of overcoming the drawbacks emerging from the prior art.

The aim of the present invention is therefore to provide an independent suspension and a vehicle which allows the maximum load volume which can be transported by the vehicle to be increased, in particular without overhanging levels, facilitating the loading/unloading and handling of material in terms of both ergonomics and time.

A further aim of the present invention is therefore to provide an independent suspension and a vehicle which allow to increase the lowered platform surface area for passenger transit from the central zone to the rear zone, and vice versa.

A further aim of the present invention is therefore to provide an independent suspension and a vehicle which allow to have free space in the centre of the axle in the case of special vehicles requiring space, for example for the installation of machinery, for an armoured body.

The specified technical task and the specified aims are substantially achieved by an independent suspension and a vehicle comprising the technical features set forth in one or more of the appended claims. The dependent claims correspond to possible embodiments of the invention.

In particular, the specified technical task and the specified aims are substantially achieved by an independent suspension for vehicles, in particular for transporting people and/or materials, comprising a hub defining a rotation axis of the vehicle wheel, an electric motor, operatively connected to the hub and configured to set the hub in rotation.

According to an aspect of the present invention, the electric motor develops along its own development axis parallel to the rotation axis of the hub, and the electric motor extends towards the hub.

According to a further aspect of the present invention, the electric motor develops its own development axis perpendicular to the rotation axis of the hub.

The independent suspension further comprises a multi-arm support element operatively connected to the hub and comprising a plurality of arms.

Each arm of the plurality of arms is angularly adjustable with respect to the rotation axis of the vehicle wheel or with respect to a connection portion connecting the multi-arm support element itself with the hub.

The specified technical task and the specified aims are further achieved by a vehicle for transporting people and/or materials comprising an independent suspension according to the present invention for each wheel of the vehicle itself.

The independent suspensions are coupled together, having a corridor defining an auxiliary load volume having an extension.

Further features and advantages of the present invention will become clearer from the indicative and therefore non-limiting description of an embodiment of an independent suspension and a vehicle.

Such a description will be set forth herein below with reference to the accompanying drawings, provided for merely indicative and therefore non-limiting purposes, wherein:
- Figure 1 is a schematic perspective view of two independent suspensions which are the subject matter of the present invention;
- Figures 2-4 are schematic exploded views of different embodiments of the independent suspension which is the subject matter of the present invention;

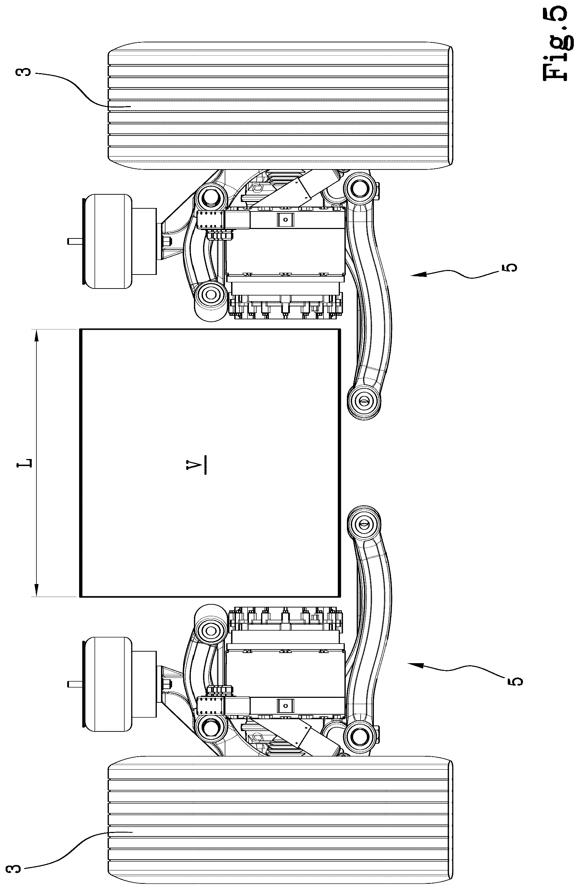

- Figure 5 is a schematic depiction of a pair of independent suspensions which are the subject matter of the present invention.

With reference to the accompanying figures, an independent suspension for vehicles, in particular for transporting people and/or materials, has been referred to as suspension 1 for simplicity of description.

The term 'vehicle' is used to mean any type of vehicle, such as (in accordance with a non-exhaustive list) buses, couriers, trucks, special vehicles and the like. In other words, the term vehicle can mean light, medium or heavy commercial vehicles. For example, the term vehicle refers to transport means suitable for transporting people or large volumes of material (loose or boxed) as well as transporting luggage. Furthermore, the term vehicle can be understood to mean a vehicle provided with a lowered platform.

The independent suspension 1 comprises a hub 2 defining a rotation axis 'R' of a wheel 3 of the vehicle.

The independent suspension 1 further comprises an electric motor 4, operatively connected to the hub 2 and configured to set the hub 2 itself in rotation.

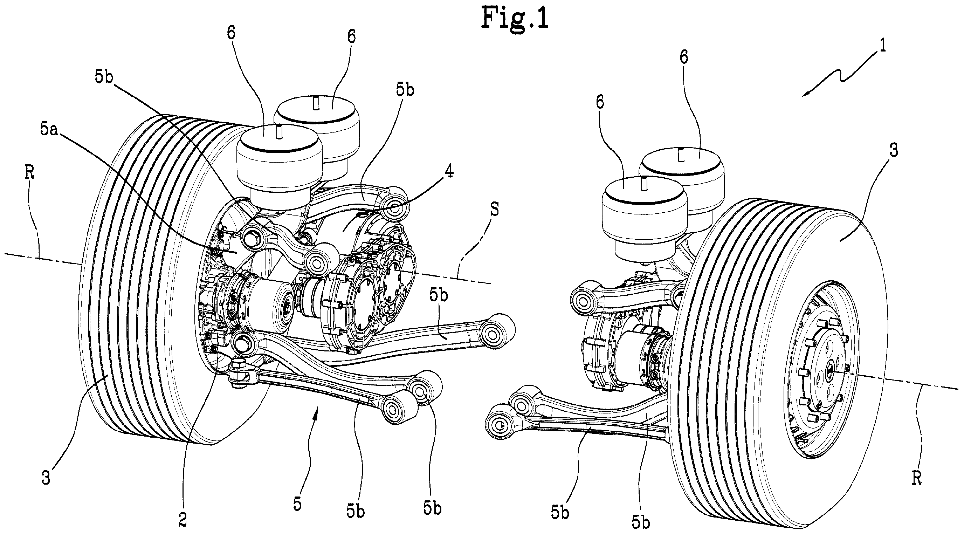

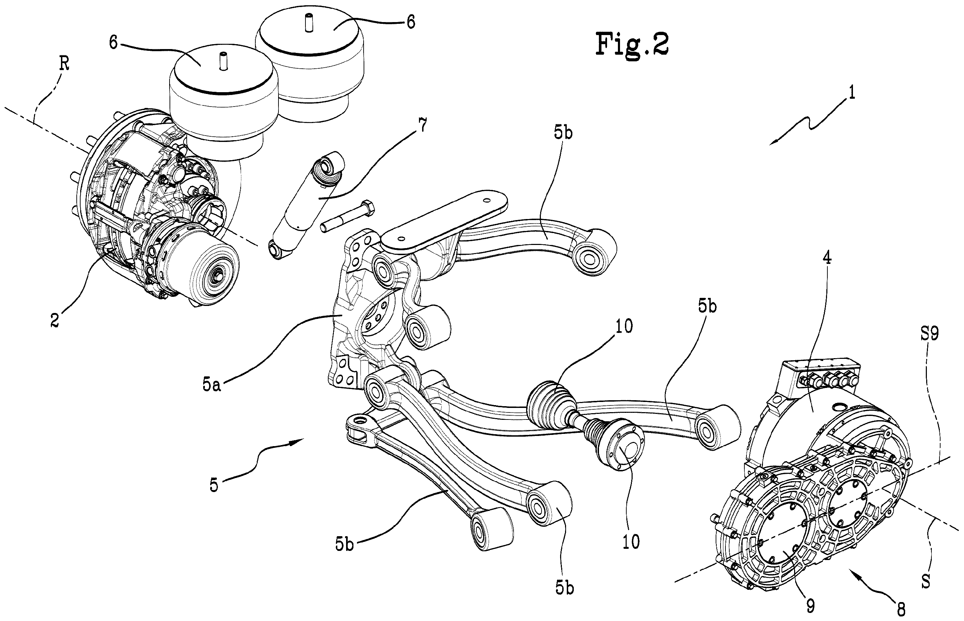

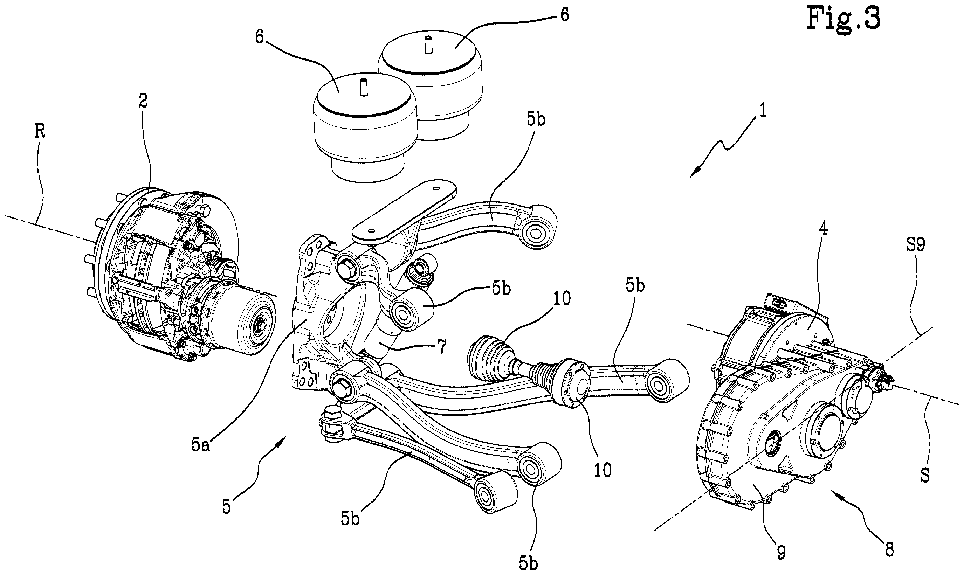

With reference to figure 1 and to the embodiments of figures 2 and 3, the electric motor 4 develops along its own development axis 'S' parallel to the rotation axis 'R' of the hub 2.

In such embodiments, the development axis 'S' of the electric motor 4 and the rotation axis 'R' of the hub 2 lie on the same horizontal plane.

In particular, in the embodiments of figures 1 to 3, the electric motor 4 develops towards the hub 2. In other words, the electric motor 4 develops towards the wheel 3.

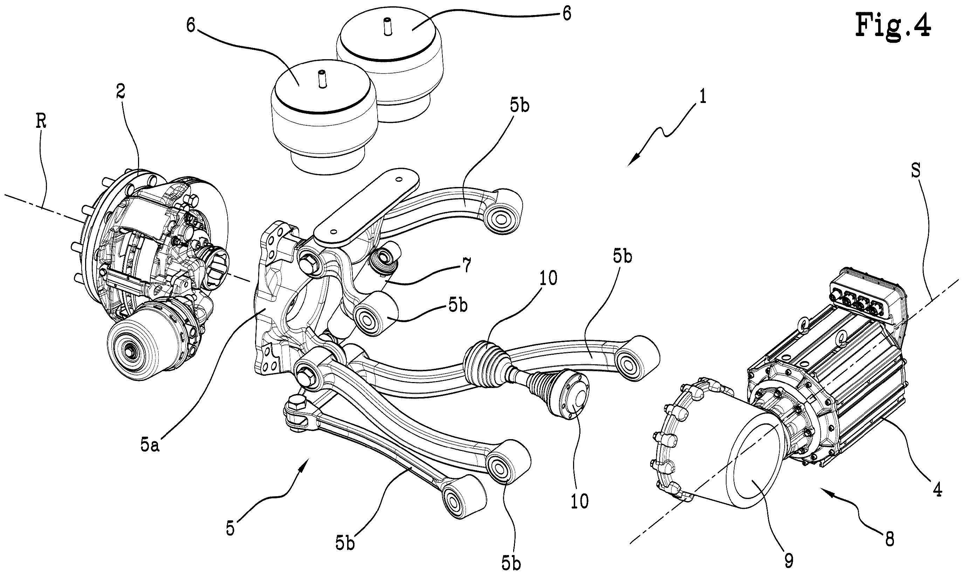

With reference to the embodiment of figure 4, the electric motor 4 develops along its own development axis 'S' transverse to the rotation axis 'R' of the hub 2.

In particular, the development axis 'S' of the electric motor 4 is transverse to the rotation axis 'R' of the hub 2 with an inclination angle comprised between 45° and 90°.

Preferably, the development axis 'S' of the electric motor 4 is transverse to the rotation axis 'R' of the hub 2 with an inclination angle comprised between 70° and 90°.

Preferably, the development axis 'S' of the electric motor 4 is transverse to the rotation axis 'R' of the hub 2 with an inclination angle comprised between 75° and 90°.

Preferably, the development axis 'S' of the electric motor 4 is transverse to the rotation axis 'R' of the hub 2 with an inclination angle comprised between 85° and 90°.

In figure 4, the development axis 'S' of the electric motor 4 is perpendicular to the rotation axis 'R' of the hub 2.

In the embodiments in which the electric motor 4 is not perpendicular to the rotation axis 'R' of the hub 2, it is recessed with respect to the main structure and in particular develops towards the hub 2, viz., towards the wheel 3.

In such an embodiment, the development axis 'S' of the electric motor 4 and the rotation axis 'R' of the hub 2 lie on the same horizontal plane.

The independent suspension 1 further comprises a multi-arm support element 5 operatively connected to the hub 2.

The multi-arm support element 5 comprises a connection portion 5a connecting the multi-arm support element 5 with the hub 2 and a plurality of arms 5b (or tie rods).

Each arm 5b of the plurality of arms 5b is angularly adjustable with respect to the rotation axis 'R' of the wheel 3 of the vehicle, viz., with respect to the connection portion 5a.

In other words, an orientation of the arms 5b is adjustable with respect to the connection portion 5a itself so that the multi-arm support element 5 or the independent suspension 1 itself can be adapted and connected to any type of frame.

Thereby, the footprint of the independent suspension 1 can be further adapted to increase an auxiliary volume 'V' of the vehicle defined between two opposite wheels 3.

In the accompanying figures, the multi-arm support element 5 comprises five arms 5b, of which three arms 5b are arranged below with respect to the connection portion 5a and two arms 5b are arranged above the connection portion 5a. Other configurations related to the arms 5b are possible depending on the type of vehicle on which the independent suspension 1 is to be installed. In particular, the arms 5b can be connected to the connection portion 5a indifferently in both the lower position or the upper one. Therefore, the multi-arm support element 5 (viz., the arms 5b) do not have vertical kinematic constraints as much as horizontal ones, as an offset from the kingpin axis of the independent suspension 1 is required to block the steering of the wheel assembly 3.

Preferably, each arm 5b of the plurality of arms 5b has a first end connected to the connection portion 5a and a second end configured to make a connection to a vehicle chassis.

Preferably, each arm 5b of the plurality of arms 5b has a first end defining an articulated connection with the connection portion 5a and a second end defining an articulated connection with a vehicle chassis. Thereby, each 5b arm is easily adjustable so as to adapt to the shape of any type of chassis.

Preferably, the multi-arm support element 5 comprises at least one spring 6 or damper and one shock absorber 7.

The spring 6 (or damper) is connected or connectable to an upper portion of the connection portion 5a. Preferably, as depicted in the accompanying figures, the multi-arm support element 5 comprises two springs 6.

The shock absorber 7 is angularly adjustable with respect to the rotation axis 'R' of the wheel 3 or with respect to the connection portion 5a of the multi-arm support element 5 so as to be able to adapt it to any type of chassis.

In other words, the spring 6 (or springs 6) and the shock absorber 7 are connected or connectable to the vehicle chassis and define a tyre suspension system.

Preferably, the spring(s) 6 can be replaced by one or more cylinders so as to define a hydraulic suspension system.

Advantageously, the multi-arm support element 5 allows greater design flexibility in terms of compactness and integration with other vehicle components. The arms 5b can be modelled to adapt to different types of transmissions and chassis types. This makes the independent suspension 1 suitable for a wide variety of vehicle layouts.

Furthermore, the multi-arm support element 5 can be fine-tuned to allow a more precise control over wheel movement, resulting in superior passenger comfort, improved manoeuvrability and reduced tyre wear. By changing the length of the arms 5b and the connection points to the chassis, it is possible to independently optimise all the parameters of the independent suspension 1, such as roll height, anti-dive, camber variation and similar parameters.

Advantageously, the multi-arm support element 5 allows to make an independent suspension 1 which is capable of ensuring excellent performance features. For example, the unsuspended masses of the vehicle can be reduced, so as to bring better fuel efficiency and manoeuvrability.

The arms 5b do not require any investment in moulding/forging equipment and are thus the most economical solution for prototypes and pre-series vehicles.

As depicted for example in the accompanying figures, the independent suspension 1 further comprises a transmission system 8, to set the hub 2 of wheel 3 in rotation by means of the electric motor 4, comprising a reducer 9, an input shaft between the electric motor 4 and the reducer 9 and an output shaft between the reducer 9 and the hub 2.

Preferably, the output shaft is connected to the hub 2 and the reducer 9 by means of respective joining elements 10 made in the form of constant-velocity joints. The term constant-velocity joints refers to joints capable of maintaining a constant gear ratio between the input shaft and the output shaft.

In the embodiment of figures 2 and 3, in which the electric motor 4 develops along the development axis 'S' parallel to the rotation axis 'R' of the hub 2, the reducer 9 develops along its own development axis 'S9' perpendicular to the rotation 'R' and development 'S' axes.

Preferably, at least the input shaft and the reducer 9 are provided with spur gears meshed to each other.

Alternatively, at least the input shaft and the reducer 9 create a motion transmission by means of transmission belts.

Preferably, the transmission system 8 is of the single-speed type, such as the embodiment of figure 2 (as that described above).

Preferably, the transmission system 8 is of the multi-speed type, such as the embodiment of figure 3 in which the transmission system is of the double-speed type. In other words, the previously described components for the transmission system 8 can be modified according to whether a multi-speed transmission system is intended to be obtained.

In the embodiment of figure 4, in which the electric motor 4 develops along its own development axis 'S' perpendicular to the rotation axis 'R' of the hub 2, the input shaft and the reducer 9 are provided with respective bevel gears meshed to each other. In other words, the input shaft is the motor shaft of the electric motor 4 (or it is a further shaft connected or connectable to the motor shaft) and is provided with a bevel gear meshed to a bevel gear of the reducer 9. The development axis of the input shaft coincides with the development axis 'S' of the electric motor 4.

Advantageously and as underlined above, the independent suspension 1 which is the subject matter of the present invention is capable of overcoming the drawbacks of the prior art.

Advantageously, the independent suspension 1 has a compact structure suitable for obtaining additional volume inside a vehicle load plane, in particular a vehicle with a lowered platform.

Furthermore, the solutions described above are particularly versatile, resulting in a structure which can be adapted according to the construction requirements of the vehicle in question.

Advantageously, the independent suspension 1 also results in a simplified structure which is easy to assemble/disassemble and therefore does not present any particular difficulties for maintenance.

Advantageously, the independent suspension 1 allows to obtain a greater corridor (viz., the space between two suspensions coupled along the same 'axis') with respect to that obtainable from the known independent axles, in which the axis of the electric motor tends to coincide with the rotation axis of the hub (in other words, those known axles in which the electric motor occupies the space which is instead obtained with the present invention) and/or where the rest of the components occupy vertical spaces.

The present invention further relates to a vehicle for loading people and/or materials comprising an independent suspension 1 (according to one or more of the forms described above) for each wheel 3 of the vehicle itself. In other words, if the vehicle has, for example, eight wheels (viz., four pairs of wheels 3), the same will also be provided with eight independent axles 1 like those described above.

The independent suspensions 1 coupled together having a corridor so as to define an auxiliary load volume 'V' having an extension 'L' between two independent suspensions 1.

In other words, the distance between two coupled wheels 3 obtained from the use of the independent suspension 1 described above allows to obtain a greater volume with respect to that which would normally be obtainable with the known solutions in which the same would be absent or so small as to be neither usable nor easily reachable. Such a solution is particularly advantageous for heavy vehicles provided with a lowered platform.

Preferably, the vehicle further comprises a load platform for loading luggage or other materials having a main load volume and a number of auxiliary load volumes 'V' equal to the number of pairs of independent suspensions 1 present in the vehicle.

Preferably, the vehicle further comprises a plane configured for supporting passengers which is provided with, near the independent suspension 1, a lying width 'A' substantially greater than the extension 'L' defined by the auxiliary volume 'V'.

Preferably, the vehicle further comprises a tailgate for loading people and/or materials. In other words, the vehicle allows access and transit in a rear zone while maintaining the lowered platform without therefore needing level changes.

Advantageously, the vehicle described above has a lowered plane provided with a greater usable volume with respect to that of the known heavy vehicles. In other words, the vehicle described above allows to transport a greater load with respect to that of the vehicles of known type. Furthermore, the vehicle described above allows more people and/or luggage to be transported (in the case of buses, for example) and therefore more materials (in the case of trucks for goods and the like).

Advantageously, the present invention provides an independent suspension and a vehicle which allows to increase the maximum load transportable by the vehicle itself.

Advantageously, the present invention provides an independent suspension and a vehicle which allow to increase the usable surface on which a passenger or other user can walk.

Advantageously, the independent suspension can be used for smaller wheels (such as those of a car or small vehicle) or for larger wheels (such as buses or the like).

Advantageously, the independent suspension allows to increase the clearance of the central body of vehicles such as logistics or special vehicles.

Advantageously, the present invention can be applied to any suspension having a structural layout different from that illustrated in the accompanying figures.

## Claims

1. An independent suspension (1) for vehicles, in particular for transporting people and/or materials, comprising:
- a hub (2) defining a rotation axis (R) of the wheel (3) of the vehicle;
- an electric motor (4), operatively connected to the hub (2) and configured to set said hub (2) in rotation, said electric motor (4) developing along its own development axis (S) that is parallel to the rotation axis (R) of the hub (2), wherein the electric motor (4) develops towards the hub, or along its own development axis (S) perpendicular to the rotation axis (R) of the hub (2);
- a multi-arm support element (5) operatively connected to the hub (2) and comprising a plurality of arms (5b), each arm (5b) of said plurality of arms (5b) being angularly adjustable with respect to said rotation axis (R) of the wheel (3) of the vehicle, i.e. with respect to a connection portion (5a) connecting the multi-arm support element (5) with the hub (2).

2. The independent suspension (1) according to claim 1, wherein each arm (5b) of the plurality of arms (5b) has a first end connected to said connection portion (5a) and a second end configured to make a connection to a vehicle chassis.

3. The independent suspension (1) according to claim 1 or 2, wherein each arm (5b) of the plurality of arms (5b) has a first end defining an articulated connection with said connection portion (5a) and a second end defining an articulated connection with a vehicle chassis.

4. The independent suspension (1) according to one or more of the preceding claims, wherein said multi-arm support element (5) comprises at least one spring (6) or damper connected or connectable to an upper portion of said connection portion (5a) and a shock absorber (7) angularly adjustable with respect to said rotation axis (R) of the wheel (3) i.e. with respect to said connection portion (5a) of said multi-arm support element (5).

5. The independent suspension (1) according to one or more of the preceding claims, further comprising a transmission system (8), to set the hub (2) of the wheel (3) in rotation by means of said electric motor (4), comprising a speed reducer (9), an input shaft between the electric motor (4) and the speed reducer (9) and an output shaft between the speed reducer (9) and the hub (2).

6. The independent suspension (1) according to claim 5, wherein said output shaft is connected to said hub (2) and to said speed reducer (9) by means of respective joining elements (10) made in the form of constant-velocity joints.

7. The independent suspension (1) according to claim 5 or 6, wherein, if said electric motor (4) develops along its own development axis (S) parallel to said rotation axis (R) of the hub (2), at least said input shaft and said reducer (9) are provided with spur gears meshed to each other or create a motion transmission by means of transmission belts.

8. The independent suspension (1) according to claim 7, wherein said transmission system (8) is of the single-speed or multiple-speed type.

9. The independent suspension (1) according to claim 5 or 6, wherein, if said electric motor (4) develops along its own development axis (S) perpendicular to said rotation axis (R) of the hub (2), said input shaft and said speed reducer (9) are provided with respective bevel gears meshed to each other.

10. A vehicle for transporting people and/or materials comprising an independent suspension (1) according to one or more of the preceding claims for each wheel (3) of the vehicle, said independent suspensions (1) coupled to each other having a corridor defining an auxiliary load volume (V) having an extension (L).

11. The vehicle according to claim 10, further comprising a load platform for loading luggage or other materials having a main load volume and a number of auxiliary load volumes (V) equal to the number of independent suspension pairs (1) present in the vehicle.

12. The vehicle according to claim 10 or 11, further comprising a plane configured for supporting passengers that is provided, near said independent suspension (1), with a lying width substantially equal to a width or extension of the auxiliary volume (V2).

13. The vehicle according to one or more of claims 10-12, further comprising a tailgate for loading people and/or materials.
